# EUROPEAN PATENT SPECIFICATION

(11) **EP 4 279 218 B1**
(45) Date of publication and mention of the grant of the patent: **15.10.2025**
(21) Application number: 23172157.2
(22) Date of filing: 08.05.2023
(51) Int. Cl.: B25B 25/00

(54) **SMART HAND INSTALLATION PINCER**
INTELLIGENTE HANDMONTAGEZANGE
PINCE INTELLIGENTE POUR L'INSTALLATION MANUELLE

(30) Priority: 16.05.2022 DE 102022112172
(43) Date of publication of application: 22.11.2023
(73) Proprietor: Oetiker Schweiz AG, 8810 Horgen (CH)
(72) Inventor: ZHENG, Wei, Tianjin, 300405 (CN); ZHANG, Yafei, Tianjin, 300405 (CN); LIU, Chen, Tianjin, 300405 (CN)
(74) Representative: Strehl & Partner mbB

(56) References cited:
- DE-A1- 102015 107 302
- US-A1- 2006 236 743

## Description

The invention relates to a manual assembly tools for ear clamps of the compound action type.

It is known to use pincer-type manual assembly tools in non-series clamp installation e.g. garages, workshops where portable, non-wired devices are needed. An overview of assembly solutions for ear clamps is disclosed in the video https://www.youtube.com/watch?v=eYwhLnHX-Nc.

It is known to provide a single-action type manual assembly tool with a deformation sensor for force monitoring, wherein a strain gauge is fixed to one of the lever arms of the tool. Fixing the strain gauge and the associated electronics to the lever arm has drawbacks including the risk of damages, even if the housing for the electronics is robust, and the indirect nature of the measurement, which reduces precision and is due to the distance between the strain gauge and the jaw elements of the pincer.

While single action pincers can generate a closing force of less than 2600 N, higher closing forces are required in some cases.

A generic pincer of the compound action type is disclosed in the document US 7434440 B2. A pair of lever arms operates a pair of jaw members to engage a pinch clamp ear. The installation tool includes a pair of jaw members with clamp edges forming a lip for receiving the clamp ears. A pair of extension arms connects the jaw members to distal ends of a pair of lever arms. The extension arms are pivotally interconnected at an intermediate portion of the jaw member section and the lever arms are connected at a pivot point close to the distal end thereof so that closing the handle ends of the lever arms translates the jaw members towards a closed position thereof, thus squeezing the clamp ear. Pincers of the compound action type can typically generated closing forces above 2600 N, up to 7000 N.

It is further known to monitor closing forces of assembly tools for ear clamps. The available solutions are, however, limited to single action pincers and to electrical or pneumatically actuated tools,

The document WO 2018 166 585 A1 discloses a electrically actuated tool for fixing a tension clamp including a pair of levers pivotable about parallel axes and carrying at their ends plier jaws that can be moved toward each other and act on the clamp. The tool is designed for locking of a buckle and a clamping band of the tension clamp and uses a deformation sensor attached to a housing and has. A force/time or force/path curve obtained from the sensor signals is used as a measure of the quality of the locking between the buckle and the clamping band.

The document US 2006/236743 A1 discloses a manual assembly tool according to the preamble of claim 1. A further related manual assembly tool is disclosed in DE 102015107302 A1, which discloses a pressing/crimping tool equipped with a force sensor, which may be a piezo-based sensor or a resistance strain gauge placed at the pressing contour.

Reliable force monitoring for compound-action manual assembly tools for ear clamps is not available and would greatly improve the reliability of the tool.

The invention is based on the problem of providing a robust and reliable means for force monitoring for manual assembly tools of the compound action type for ear clamps.

The problem is solved by a manual assembly tool having the features of claim 1. Advantageous embodiments of the invention are defined in the dependent claims.

The invention relates to amanual assembly tool of the compound action type for ear clamps, including a pair of lever arms, a pair of jaw members. The lever arms are pivotably connected to each other at a pivot point near a distal end of the lever arms, where-in each lever arm includes a handle end on a proximal side and an extension arm extending beyond the pivot point. The jaw members include clamp edges forming a lip for receiving the clamp ears. Each of the jaw members is pivotably connected to the one of the extension arms at its proximal end, wherein the jaw members are pivotally interconnected at an intermediate portion of the jaw member so that closing the handle ends of the lever arms translates the jaw members towards a closed position thereof, thus squeezing the clamp ear.

It is proposed that the manual assembly tool further includes a deformation sensor directly attached to at least one of the jaw members and a signal means for generating a signal indicative of the closing force applied by the jaw member. By providing a deformation sensor directly to the jaw member rather than to a lever arm, a more reliable measurement can be assured. The signal means provides visual, tactile or acoustic feedback regarding the clamping force and correct closure of the clamp to the user.

Here and in the following, the expressions "distal" and "proximal" relate to the perspective of the user of the clamp.

According to the invention, the deformation sensor is arranged between the proximal end of the jaw member connected to the lever arm and the intermediate portion of the jaw member connected to the other jaw member. This position avoids the risk of damages which would be entailed by placing the deformation sensor closer to the jaw edges of the jaw member and is a place where comparatively large deformations occur, and a good response can be expected.

In a preferred embodiment of the invention, the signal means includes an electronic circuit, in particular an amplifier circuit, generating a signal when the force measured by the deformation sensor exceeds a threshold. The signal means may include an electronic circuit configured to convert the signal obtained from the deformation sensor into a signal representing the force, e.g. using a characteristic stored in a memory element. Preferably, the threshold is adjustable, e.g. by adjusting an element of the electronic circuit. This allows a simple calibration of the force sensor, which is required before the first use and eventually at defined maintenance intervals.

It is further proposed to avoid damages by arranging the deformation sensor in a recess in the jaw member and protecting it by a plastic housing or cover or by potting with resin.

In a preferred embodiment of the invention the deformation sensor is provided in a side face perpendicular to the pivot direction of the jaw member. This position is somewhat protected against hits, without direct contact to the clamp and the inventors have found that a reliable signal can be obtained.

The inventors further propose that the deformation sensor is a strain gauge. Using a strain gauge to detect closing forces is an economic and well-tested solution. The signal is then preferably amplified and processed to activate the attached indicator means.

The inventors further propose that the deformation sensor includes at least one flat spring arranged so as to be deformed during operation of the tool and connected to one first electrical contact, wherein the electrical contact is configured to contact a second electrical contact when a force corresponding to the threshold force or higher is applied. The springs are compressed during operation, and at a specific compression rate the electrical contacts meet and activate the circuit, then the attached indication means are engaged.

In a preferred embodiment of the invention, the manual assembly tool includes an adjusting screw for adjusting the threshold force, in particular the force at which the contacts meet.

In a further embodiment of the invention, the jaw member includes a slot configured to be narrowed when a closing force is applied to the jaw member, where-in electrical contact elements are provided on side faces of the slot, wherein the electrical contact between the contact elements is created when a force corresponding to the threshold force or higher is applied. When applying force from handle, the slot will deform that the electrical contacts, preferably formed as metal studs, are approaching each other, and at the given force the two meet each other. Then the electrical circuit gets connected, then the attached indicator means are activated.

In a preferred embodiment of the invention, the signal means includes a vibration motor, which allows providing reliable haptic feedback for the user even in noisy environments and/or where the user has poor sight on the clamp being closed and/or on the tool. In addition to or as an alternative to the vibration motor, the signal means includes an LED and/or a beeper.

Further features and advantages will be apparent from the following description of the embodiments and figures. The entire description, claims and figures disclose features of the invention in specific embodiments and combinations. The person skilled in the art will also consider the features individually and combine them into further combinations or sub-combinations to adapt the invention, as defined in the claims, to his needs or to specific fields of application.

The figures illustrate the following:
Fig. 1 a manual assembly tool according to a first embodiment of the invention with a strain gauge;
Fig. 2 a manual assembly tool according to a second embodiment of the invention with contacts moved by flat springs; and
Fig. 3 a manual assembly tool according to a third embodiment of the invention with a contacts arranged in slot of the jaw member.

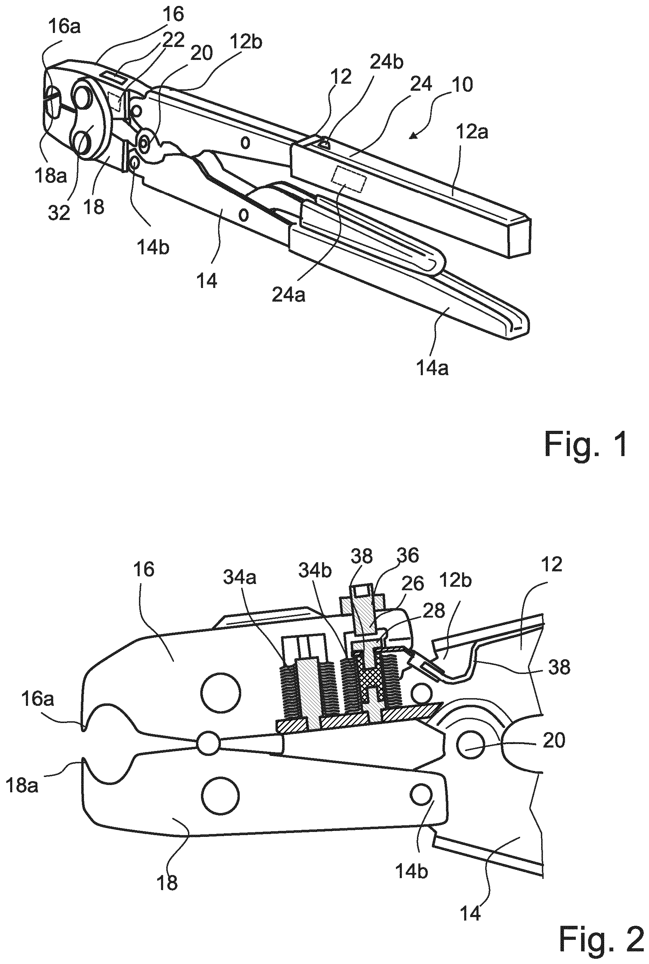

Fig. 1 shows a manual assembly tool 10 according to a first embodiment of the invention.

The manual assembly tool 10 is a tool of the compound action type for ear clamps, including a pair of lever arms 12, 14 and a pair of jaw members 16, 18. The lever arms 12, 14 are pivotably connected to each other at a pivot point 20 near a distal end of the lever arms 12, 14, where-in each lever arm 12, 14 includes a handle end 12a, 14a on a proximal side and an extension arm 12b, 14b extending beyond the pivot point 20. The jaw members 16, 18 include clamp edges clamp edges 16a, 18a forming a lip for receiving the clamp ears. Each of the jaw members 16, 18 is pivotably connected to the one of the extension arms 12b, 14b at its proximal end, wherein the jaw members 16, 18 are pivotally interconnected at an intermediate portion of the jaw member 16, 18 via a connection element 32 so that closing the handle ends 12a, 14a of the lever arms 12, 14 translates the jaw members 16, 18 towards a closed position thereof, thus squeezing the clamp ear.

A deformation sensor 22 is directly attached to one of the jaw members 16 and a signal means 24 for generating a signal indicative of the closing force applied by the jaw member 16, 18 is provided in a plastic hosing on a handle and 12a of one of the lever arms 12. A wire (not illustrated) is provided between the sensor 22 and the signal means 24 to read out sensor 22.

In the embodiment of Fig. 1, the deformation sensor 22 is a strain gauge arranged between the proximal end of the jaw member 16, 18 connected to the lever arm 12, 14 and the intermediate portion of the jaw member 16, 18 connected to the other jaw member 16, 18, specifically in a recess in the jaw member 16, 18 and is protected by a plastic housing or cover. In the embodiment of Fig. 1, the recess with the deformation sensor 22 is on a top side face parallel to the pivot direction of the jaw member 16, 18 at a place where maximum deformation is expected. In alternative embodiments, the deformation sensor 22 may be placed on a side face of the jaw member 16, 18, as illustrated with dashed lines in Fig. 1. It has turned out that the latter placement is preferable because the signal has been found to be most reproducible and stable, i.e. a time interval between re-calibration procedures may be set to be long.

The signal means 24 includes an electronic circuit (not illustrated) amplifying the signal of the deformation sensor 22 generating a signal when the force measured by the deformation sensor 22 exceeds a threshold. The threshold is adjustable, e.g. by setting the amplification of the electronic circuit. The signal means 24 includes a vibration motor 24a and a LED 24b providing a visual and tactile feedback for the user and may include means for indicating that a re-calibration is required. Moreover, the electronic circuit may optionally include wireless data transmission means for transmitting the measured data to a remote device, e.g. for quality control purposes.

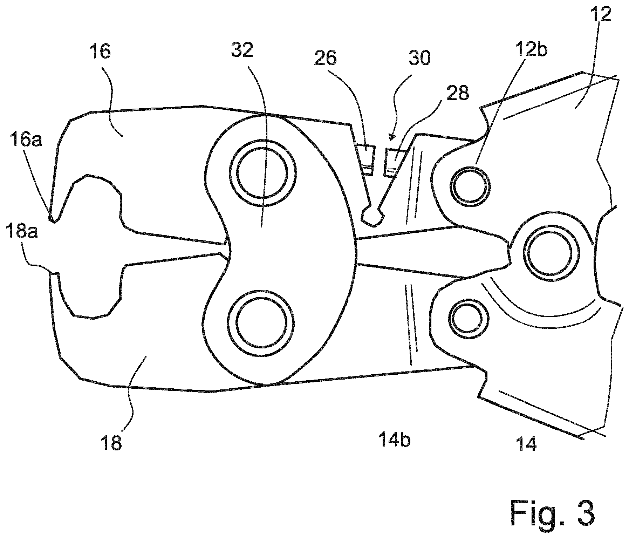

Figures 2 and 3 show further embodiments of the invention. To avoid repetition, the following description of these further embodiments is essentially limited to differences from the first embodiment of the invention. Because of the unchanged features, the skilled person is referred to the description of the first embodiment. The same reference signs are used for features of the further embodiments that have the same or similar effect in order to emphasize the similarities.

Fig. 2 illustrates manual assembly tool 10 according to a second embodiment of the invention with contacts 26, 28 normally separated by a force generated by flat springs.

In the embodiment of Fig. 2, the deformation sensor 22 includes two stacks of annular flat springs 34a, 34b arranged so as to be deformed during operation of the tool 10 and connected to one first electrical contact 26, wherein the electrical contact 26 is configured to contact a second electrical contact 28 attached to the body of one of the jaw members 16 when a force corresponding to the threshold force or higher is applied. An adjusting screw 36 for adjusting the threshold force is provided on the top side of the jaw member 16 and the second electrical contact 28 is an inner end of the adjusting screw 36.

The force is transmitted via the two stacks of flat springs 34a, 34b which are being compressed when a force is applied. The first electrical contact 26 is arranged on a peg 38 in the center of one of the stacks of flat springs 34b. An inner end of the adjusting screw 36 is the second contact 28 which comes in contact with the contact 26 upon reaching a threshold force, which depends on the position of the adjusting screw 36, and closes the electric circuit triggering the signal of the signal means 24 via wire 38.

Fig. 3 illustrates a manual assembly tool 10 according to a third embodiment of the invention with a contacts 26, 28 arranged in slot of the jaw member 16, 18.

The jaw member 16, 18 includes a slot 30 on a top side thereof and extending parallel to the pivot axis of the jaw element. The slot 30 is configured to be narrowed when a closing force is applied to the jaw member 16, 18, wherein electrical contact elements 26, 28 are provided on side faces of the slot 30, wherein the electrical contact between the contact elements 26, 28 is created when a force corresponding to the threshold force or higher is applied.

In further embodiments of the invention, the tool 10 may include a radio transmission circuit for transmitting the results of a force measurement to external monitoring and quality control databases and it would be possible to not only compare the force to a threshold but rather to measure an actual value of the force. The indicator means could further be used to indicate that a new calibration is required for the tool.

### List of reference numbers

- 10: tool
- 12: lever arm
- 12a: handle end
- 12b: extension arm
- 14: lever arm
- 14a: handle end
- 14b: extension arm
- 16: jaw member
- 16a: clamp edge
- 18: jaw member
- 18a: clamp edge
- 20: pivot point
- 22: deformation sensor
- 24: signal means
- 24a: vibration motor
- 24b: LED
- 26: contact
- 28: contact
- 30: Slot
- 32: connection element
- 34a: flat springs
- 34b: flat springs
- 36: adjusting screw
- 38: peg

## Claims

1. Manual assembly tool (10) of the compound action type for ear clamps, including:
a pair of lever arms (12, 14) pivotably connected to each other at a pivot point (20) near a distal end of the lever arms (12, 14), wherein each lever arm (12, 14) includes a handle end (12a, 14a) on a proximal side and an extension arm (12b, 14b) extending beyond the pivot point (20),
a pair of jaw members (16, 18) with clamp edges (16a, 18a) forming a lip for receiving the clamp ears, wherein each of the jaw members (16, 18) is pivotably connected to the one of the extension arms (12b, 14b) at its proximal end,
wherein the jaw members (16, 18) are pivotally interconnected at an intermediate portion of the jaw member (16, 18) so that closing the handle ends (12a, 14a) of the lever arms (12, 14) translates the jaw members (16, 18) towards a closed position thereof, thus squeezing the clamp ear,
**characterized by** further including a deformation sensor (22) directly attached to at least one of the jaw members (16, 18) and a signal means (24) for generating a signal indicative of the closing force applied by the jaw member (16, 18),
wherein
the deformation sensor (22) is arranged between the proximal end of the jaw member (16, 18) connected to the lever arm (12, 14) and the intermediate portion of the jaw member (16, 18) connected to the other jaw member (16, 18).

2. Manual assembly tool (10) according to one of the preceding claims,
**characterized in that**
the signal means (24) includes an electronic circuit generating a signal when the force measured by the deformation sensor (22) exceeds a threshold.

3. Manual assembly tool (10) according to one of the preceding claims,
**characterized in that**
the threshold is adjustable.

4. Manual assembly tool (10) according to one of the preceding claims,
**characterized in that**
the deformation sensor (22) is arranged in a recess in the jaw member (16, 18) and is protected by a plastic housing or cover.

5. Manual assembly tool (10) according to one of the preceding claims,
**characterized in that**
the deformation sensor (22) is provided in a side face perpendicular to the pivot direction of the jaw member (16, 18).

6. Manual assembly tool (10) according to one of the preceding claims,
**characterized in that**
the deformation sensor (22) is a strain gauge.

7. Manual assembly tool (10) according to one of the preceding claims,
**characterized in that**
the deformation sensor (22) includes at least one flat spring arranged so as to be deformed during operation of the tool and connected to at least one first electrical contact (26), wherein the electrical contact (26) is configured to contact a second electrical contact (28) when a force corresponding to the threshold force or higher is applied.

8. Manual assembly tool (10) according to claim 7,
**characterized by**
including an adjusting screw for adjusting the threshold force.

9. Manual assembly tool (10) according to one of the preceding claims,
**characterized in that**
the jaw member (16, 18) includes a slot (30) configured to be narrowed when a closing force is applied to the jaw member (16, 18), wherein electrical contact elements (26, 28) are provided on side faces of the slot (30), wherein the electrical contact between the contact elements (26, 28) is created when a force corresponding to the threshold force or higher is applied.

10. Manual assembly tool (10) according to one of the preceding claims,
**characterized in that**
the signal means (24) includes a vibration motor (24a).

11. Manual assembly tool (10) according to one of the preceding claims,
**characterized in that**
the signal means (24) includes an LED (24b).

## Patentansprüche

1. Manuelle Montagezange (10) vom Übersetzungstyp für Ohrschellen, umfassend:
ein Paar Hebelarme (12, 14), die an einem Drehpunkt (20) nahe einem distalen Ende der Hebelarme (12, 14) schwenkbar miteinander verbunden sind, wobei jeder Hebelarm (12, 14) ein Griffende (12a, 14a) an einer proximalen Seite und einen Verlängerungsarm (12b, 14b) umfasst, der sich über den Drehpunkt (20) hinaus erstreckt,
ein Paar Backenelemente (16, 18) mit Klemmkanten (16a, 18a), die eine Lippe zum Aufnehmen der Klemmenohren bilden, wobei jedes der Backenelemente (16, 18) an seinem proximalen Ende schwenkbar mit einem der Verlängerungsarme (12b, 14b) verbunden ist, wobei die Backenelemente (16, 18) an einem Zwischenabschnitt des Backenelements (16, 18) schwenkbar miteinander verbunden sind, so dass das Schließen der Griffenden (12a, 14a) der Hebelarme (12, 14) die Backenelemente (16, 18) in eine geschlossene Position derselben bewegt, wodurch das Klemmenohr zusammengedrückt wird,
**dadurch gekennzeichnet, dass**
sie ferner einen Verformungssensor (22) umfasst, der direkt an mindestens einem der Backenelemente (16, 18) angebracht ist, und ein Signalmittel (24) zum Erzeugen eines Signals, das die durch das Backenelement (16, 18) ausgeübte Schließkraft anzeigt, wobei
der Verformungssensor (22) zwischen dem proximalen Ende des Backenelements (16, 18), das mit dem Hebelarm (12, 14) verbunden ist, und dem Zwischenabschnitt des Backenelements (16, 18), der mit dem anderen Backenelement (16, 18) verbunden ist, angeordnet ist.

2. Manuelle Montagezange (10) nach einem der vorhergehenden Ansprüche,
**dadurch gekennzeichnet, dass**
das Signalmittel (24) eine elektronische Schaltung umfasst, die ein Signal erzeugt, wenn die durch den Verformungssensor (22) gemessene Kraft einen Schwellenwert überschreitet.

3. Manuelle Montagezange (10) nach einem der vorhergehenden Ansprüche,
**dadurch gekennzeichnet, dass**
der Schwellenwert einstellbar ist.

4. Manuelle Montagezange (10) nach einem der vorhergehenden Ansprüche,
**dadurch gekennzeichnet, dass**
der Verformungssensor (22) in einer Aussparung im Backenelement (16, 18) angeordnet und durch ein Kunststoffgehäuse oder eine Abdeckung geschützt ist.

5. Manuelle Montagezange (10) nach einem der vorhergehenden Ansprüche,
**dadurch gekennzeichnet, dass**
der Verformungssensor (22) in einer Seitenfläche senkrecht zur Schwenkrichtung des Backenelements (16, 18) vorgesehen ist.

6. Manuelle Montagezange (10) nach einem der vorhergehenden Ansprüche,
**dadurch gekennzeichnet, dass**
der Verformungssensor (22) ein Dehnungsmessstreifen ist.

7. Manuelle Montagezange (10) nach einem der vorhergehenden Ansprüche,
**dadurch gekennzeichnet, dass**
der Verformungssensor (22) mindestens eine Blattfeder umfasst, die so angeordnet ist, dass sie während des Betriebs des Werkzeugs verformt wird und mit mindestens einem ersten elektrischen Kontakt (26) verbunden ist, wobei der elektrische Kontakt (26) so konfiguriert ist, dass er einen zweiten elektrischen Kontakt (28) berührt, wenn eine Kraft ausgeübt wird, die dem Schwellenwert der Kraft entspricht oder größer ist.

8. Manuelle Montagezange (10) nach Anspruch 7,
**dadurch gekennzeichnet, dass**
sie eine Einstellschraube zum Einstellen des Schwellenwerts der Kraft umfasst.

9. Manuelle Montagezange (10) nach einem der vorhergehenden Ansprüche,
**dadurch gekennzeichnet, dass**
das Backenelement (16, 18) einen Schlitz (30) umfasst, der so konfiguriert ist, dass er verengt wird, wenn eine Schließkraft auf das Backenelement (16, 18) ausgeübt wird, wobei elektrische Kontaktelemente (26, 28) an Seitenflächen des Schlitzes (30) vorgesehen sind, wobei der elektrische Kontakt zwischen den Kontaktelementen (26, 28) hergestellt wird, wenn eine Kraft ausgeübt wird, die dem Schwellenwert der Kraft entspricht oder größer ist.

10. Manuelle Montagezange (10) nach einem der vorhergehenden Ansprüche,
**dadurch gekennzeichnet, dass**
das Signalmittel (24) einen Vibrationsmotor (24a) umfasst.

11. Manuelle Montagezange (10) nach einem der vorhergehenden Ansprüche,
**dadurch gekennzeichnet, dass**
das Signalmittel (24) eine LED (24b) umfasst.

## Revendications

1. Outil (10) d'assemblage manuel du type à action composée pour colliers à oreilles, incluant :
une paire de bras de levier (12, 14) connectés pivotants l'un à l'autre au niveau d'un point de pivot (20) à proximité d'une extrémité distale des bras de levier (12, 14), dans lequel chaque bras de levier (12, 14) inclut une extrémité (12a, 14a) de poignée sur un côté proximal et un bras (12b, 14b) d'extension s'étendant au-delà du point de pivot (20),
une paire d'éléments (16, 18) de mâchoire avec des bords (16a, 18a) de collier formant une lèvre pour recevoir les oreilles de collier, dans lequel chacun des éléments (16, 18) de mâchoire est connecté pivotant à celui des bras (12b, 14b) d'extension à son extrémité proximale,
dans lequel les éléments (16, 18) de mâchoire sont interconnectés pivotants au niveau d'une partie intermédiaire de l'élément (16, 18) de mâchoire de telle sorte que la fermeture des extrémités (12a, 14a) de poignée des bras de levier (12, 14) translate les éléments (16, 18) de mâchoire vers une position fermée de ceux-ci, écrasant ainsi l'oreille de collier,
**caractérisé en ce qu'**incluant en outre un capteur (22) de déformation directement fixé sur au moins un des éléments (16, 18) de mâchoire et un moyen (24) de signalisation pour générer un signal indicateur de la force de fermeture appliquée par l'élément (16, 18) de mâchoire,
dans lequel
le capteur (22) de déformation est agencé entre l'extrémité proximale de l'élément (16, 18) de mâchoire connectée au bras de levier (12, 14) et la partie intermédiaire de l'élément (16, 18) de mâchoire connectée à l'autre élément (16, 18) de mâchoire.

2. Outil (10) d'assemblage manuel selon l'une des revendications précédentes,
**caractérisé en ce que**
le moyen (24) de signalisation inclut un circuit électronique générant un signal lorsque la force mesurée par le capteur (22) de déformation excède un seuil.

3. Outil (10) d'assemblage manuel selon l'une des revendications précédentes,
**caractérisé en ce que**
le seuil est ajustable.

4. Outil (10) d'assemblage manuel selon l'une des revendications précédentes,
**caractérisé en ce que**
le capteur (22) de déformation est agencé dans un renfoncement dans l'élément (16, 18) de mâchoire et est protégé par un boîtier ou un couvercle en plastique.

5. Outil (10) d'assemblage manuel selon l'une des revendications précédentes,
**caractérisé en ce que**
le capteur (22) de déformation est prévu dans une face latérale perpendiculaire au sens de pivotement de l'élément (16, 18) de mâchoire.

6. Outil (10) d'assemblage manuel selon l'une des revendications précédentes,
**caractérisé en ce que**
le capteur (22) de déformation est un capteur de contrainte.

7. Outil (10) d'assemblage manuel selon l'une des revendications précédentes,
**caractérisé en ce que**
le capteur (22) de déformation inclut au moins un ressort plat agencé de façon à être déformé lors du fonctionnement de l'outil et connecté à au moins un premier contact électrique (26), dans lequel le contact électrique (26) est configuré pour contacter un deuxième contact électrique (28) lorsqu'une force correspondant à la force seuil ou supérieure est appliquée.

8. Outil (10) d'assemblage manuel selon la revendication 7,
**caractérisé en ce que**
incluant une vis d'ajustement pour ajuster la force seuil.

9. Outil (10) d'assemblage manuel selon l'une des revendications précédentes,
**caractérisé en ce que**
l'élément (16, 18) de mâchoire inclut une fente (30) configurée pour être rétrécie lorsqu'une force de fermeture est appliquée à l'élément (16, 18) de mâchoire, dans lequel des éléments de contact électrique (26, 28) sont prévus sur des faces latérales de la fente (30), dans lequel le contact électrique entre les éléments de contact (26, 28) est créé lorsqu'une force correspondant à la force seuil ou supérieure est appliquée.

10. Outil (10) d'assemblage manuel selon l'une des revendications précédentes,
**caractérisé en ce que**
le moyen (24) de signalisation inclut un moteur à vibration (24a).

11. Outil (10) d'assemblage manuel selon l'une des revendications précédentes,
**caractérisé en ce que**
le moyen (24) de signalisation inclut une LED (24b).
